Europäisches Patentamt

European Patent Office

Office européen des brevets

(19)

(11) Veröffentlichungsnummer: **0 097 725 B1**

(12) **EUROPÄISCHE PATENTSCHRIFT**

(45) Veröffentlichungstag der Patentschrift:
14.05.86

(51) Int. Cl.⁴: **G 06 F 9/22**, G 06 F 9/26

(21) Anmeldenummer: 82105015.0

(22) Anmeldetag: 08.06.82

(54) Einrichtung im Befehlswerk eines mikroprogrammgesteuerten Prozessors zur direkten hardwaregesteuerten Ausführung bestimmter Instruktionen.

(43) Veröffentlichungstag der Anmeldung:
11.01.84 Patentblatt 84/2

(45) Bekanntmachung des Hinweises auf die Patenterteilung:
14.05.86 Patentblatt 86/20

(84) Benannte Vertragsstaaten:
BE CH DE FR GB IT LI NL SE

(56) Entgegenhaltungen:
DE - B - 3 009 121
US - A - 3 872 447
US - A - 4 140 872

IBM TECHNICAL DISCLOSURE BULLETIN, Band 16, Nr. 4, September 1973, Seiten 1106-1108, New York, USA D.K. HARDIN: "Read-only storage control for high-speed instruction execution"
IBM TECHNICAL DISCLOSURE BULLETIN, Band 9, Nr. 7, Dezember 1966, Seite 796, New York USA J.F. KEVILL: "Double usage of read-only storage"
ELEKTRONISCHE RECHENANLAGEN, Band 14, Nr. 1, Februar 1972, Seiten 28-32, München, DE. W. STRUTYNSKI: "Der Einfluss technologischer und funktioneller Randbedingungen auf das Mikrobefehlsformat"
IBM TECHNICAL DISCLOSURE BULLETIN, Band 14, Nr. 1, Juni 1971, Seite 298, New York, USA M. FAIX et al.: "Combined macro/micro program machine"
Klar, Wichmann, "Mikroprogrammierung", Bd 8, Nr. 3, Juni 1975, S. 42-54

(73) Patentinhaber: **IBM DEUTSCHLAND GMBH, Pascalstrasse 100, D-7000 Stuttgart 80 (DE)**

(84) Benannte Vertragsstaaten: **DE**

(73) Patentinhaber: **International Business Machines Corporation, Old Orchard Road, Armonk, N.Y. 10504 (US)**

(84) Benannte Vertragsstaaten: **BE CH FR GB IT LI NL SE**

(72) Erfinder: **Chilinski, Herbert, Dipl.-Ing., Schwabenstrasse 97, D-7036 Schönaich (DE)**
Erfinder: **Getzlaff, Klaus J., Ing. grad., Friesenweg 26, D-7036 Schönaich (DE)**
Erfinder: **Hajdu, Johann, Ing. grad., Bergamastrasse 77, D-7030 Böblingen (DE)**
Erfinder: **Raeth, Franz Josef, Dipl.-Math., Postplatz 12, D-7030 Böblingen (DE)**

(74) Vertreter: **Jost, Ottokarl, Dipl.-Ing., Schönaicher Strasse 220, D-7030 Böblingen (DE)**

## Beschreibung

Die Erfindung betrifft eine Einrichtung im Befehlswerk eines mikroprogrammgesteuerten Prozessors zur direkten hardwaregesteuerten Ausführung bestimmter Instruktionen nach dem Oberbegriff des Anspruchs 1.

Die Erfindung findet Verwendung in mikroprogrammgesteuerten Prozessoren, bei denen der Operationscode der Makroinstruktionen als Adresse zur Ansteuerung eines Steuerspeichers dient, in dem sowohl eine Operationscodetabelle als auch die Mikroinstruktionen gespeichert sind, die zur Ausführung der Makroinstruktionen benötigt werden. Der Operationscode der Makroinstruktion wird durch die Operationscodetabelle im allgemeinen in eine Adresse umgesetzt, die sich ebenfalls auf den Steuerspeicher bezieht und unter der im Steuerspeicher die erste Mikroinstruktion einer Mikroroutine gespeichert ist, die zur Ausführung der betreffenden Makroinstruktion abgearbeitet wird.

Die aus dem Steuerspeicher ausgelesenen Mikroinstruktionen, auch allgemein als Steuerwörter bezeichnet, gelangen meist in ein Mikroinstruktions-Operationsregister, werden dort zwischengespeichert und einem Instruktionsdecodierer zugeführt, der die Steuerwörter mit den Instruktionszykluszeiten verknüpft und auf diese Weise zykluszeitbezogene Steuersignale erzeugt, die dann die Datenfluss-Steuerelemente, beispielsweise Setzeingänge für Register, Torschaltungen und dgl., steuern.

Die Erzeugung der Folgeadresse der jeweils nächsten Mikroinstruktion einer Routine kann auf verschiedene Weise vorgenommen werden, beispielsweise durch Modifizierung der im Steuerspeicher-Adressregister befindlichen Adresse in einem + 1-Modifizierer, oder sie kann ganz einfach in den Mikroinstruktionen selbst mitgeführt werden.

In der ersten und zweiten Computergeneration bestand die Steuereinheit, auch Befehlswerk genannt, im allgemeinen aus festverdrahteter Schaltkreislogik. Nachteilig waren dabei die Unübersichtlichkeit des Aufbaus, die Schwierigkeit von nachträglichen Änderungen und insbesondere die hohen Schaltkreiskosten.

Generelle Überlegungen zur Verbesserung der Steuerwerke von Prozessoren führten zu einer systematischen speichergesteuerten Struktur der Steuerlogik, die dann als Mikroprogrammierung bzw. Mikroprogrammsteuerung bezeichnet wurde. M. V. Wilckes hat diese Technik erstmals 1951 vorgestellt: «The best way to design an automatic calculation machine», Manchester University Computer Inaugural Conference, Manchester, England, 1951, Seite 16 sowie 1969 in «The goals of interest in microprogramming — a literature survey», Computing Surveys, Band 1, September 1969, Seiten 139 bis 145.

Logisch stellt eine Mikroprogrammroutine ein Unterprogramm zur Ausführung einer Maschinen- oder Makroinstruktion dar.

Da das Mikroprogramm seinerzeit in Festwertspeichern eingeschrieben wurde, deren Ausgänge direkt, d.h. ohne Verwendung eines Decodierers, auf Hardwareebene fest zugeordnete Steuerfunktionen ausübten, die Ausgangsleitungen, also z.B. Setzleitungen für Register, Leitungen für Torsteuersignale usw., waren und ein Bit in einer Mikroinstruktion an dieser Stelle kennzeichnete, dass die Leitung für diese Mikroinstruktion aktiv werden sollte, wurde die Struktur einer solchen Mikroinstruktion wegen ihrer Länge (Grössenordnung 100 Bits und mehr) horizontal genannt; vgl. «Elektronische Rechenanlagen», Bd. 14, Nr. 1, 1972, Seiten 29 und 30.

Ihr Hauptnachteil ist die schlechte Ausnutzung des Mikroprogrammspeichers. Der Grossteil der Speicherkapazität bleibt ineffektiv, da das einzelne Steuersignal nicht für jedes Mikrowort oder Steuerwort benötigt wird und die entsprechenden Speicherbits wegen ihres uncodierten Charakters keine Information tragen.

Das andere Extrem eines Mikroinstruktionsformats ist das vertikale; vgl. ebenfalls «Elektronische Rechenanlagen». Es ist dem einer normalen Mikroinstruktion sehr ähnlich. Die Funktion der Instruktion wird im Operationscode hochcodiert zusammengefasst. Der Rest der Instruktion besteht im wesentlichen aus Adressfeldern, da die Mikroinstruktion im vertikalen Format, im Gegensatz zum horizontalen, auch interne Arbeitsregister adressieren kann.

Die Mikroinstruktion ist damit komplexer; ihr Funktionsgehalt entspricht dem von mehreren, sonst seriell ablaufenden horizontalen Instruktionen. Diese komplexere Funktion muss nun wieder in entsprechende Einzelschritte zerlegt werden, was bei bisher ausgeführten Maschinen im allgemeinen eine schaltkreis-verdrahtete Steuerlogik übernommen hat.

Die Mikroinstruktion dient jetzt nur dem Abruf für eine Hardware-Ablaufsteuerung, die in Operationscode und andere Informationen decodiert und in eine Folge von Elementarschritten umsetzt. Es wird durch diese hierarchische Struktur also eine Mehrfachausnutzung der Ablaufsteuerung erzielt. Der Steuerspeicher des vertikalen Formats kann langsamer sein, da die Ausführung wegen der dazwischengeschalteten Steuerlogik länger dauert. Nachteilig beim streng vertikalen Format ist die starke Serialisierung der Steuervorgänge, die sich auf die Verarbeitungsgeschwindigkeit eines Prozessors insgesamt auswirkt.

Einen Kompromiss aus horizontalem und vertikalem Format stellt eine Mikroinstruktion mit codierten Instruktionsfeldern dar, deren Format als quasi-horizontal bezeichnet werden kann. Der Gesamtoperationscode ist hierbei in Unterfunktionen aufgeteilt, die an einzelne Bitgruppen des Formats streng gekoppelt sind. Zusätzlich können noch direkte Steuerbits bzw. ähnliche Funktionselemente eingefügt werden. Es werden mit einer Instruktion auch mehr Funktionen parallel abgedeckt als beim vertikalen Format, wodurch die Instruktionslänge wieder zu Bitzahlen von 50 und mehr anwachsen kann. Die Decodierung ist jetzt gegenüber dem vertikalen Format einfacher und schneller; vgl. Klar, Wichmann, «Mikroprogrammierung», Juni 1975, Seiten 42 bis 54, insbesondere Seiten 44 und 45. Ein weiterer Kompromiss geht aus den Seiten 49 bis 51 hervor. IBM Technical Disclosure Bulletin, Bd. 9, Nr. 7, Dezember 1966, Seite 796 beschreibt die Verwendung eines Bits in einer Mikroinstruktion zur Unterscheidung, ob ein Mikroinstruktionsfeld unmittelbar als Konstante oder als Adresse dienen soll.

Eine Kombination zwischen einer direkt hardwaregesteuerten Maschine und einer interpretativ, d.h. mikroprogrammbesteuerten Maschine, ist im IBM Technical Disclosure Bulletin, Bd. 14, Nr. 1, Juni 1971, Seite 298 beschrieben. Um die Verarbeitungsgeschwindigkeit von mikroprogrammgesteuerten Prozessoren zu erhöhen, ohne jedoch die Zahl der Schaltkreise wesentlich zu erhöhen, wird sowohl für die Makro- als auch die Mikroinstruktionen das gleiche Instruktionsformat verwendet. Dieses erlaubt einen Schaltkreisentwurf des Instruktionssteuerwerkes derart, dass einfache Makroinstruktionen für die Durchführung einfacher Funktionen, wie beispielsweise «Lade Register», «Speicher Register im Hauptspeicher» und dgl., direkt ausgeführt werden können. Komplexere Makroinstruktionen, wie beispielsweise Gleitkomma-Operationen oder dezimalarithmetische Funktionen, werden jedoch interpretativ ausgeführt, allerdings mit Hilfe von Mikroinstruktionen, die ebenfalls direkt ausführbar sind, wobei sie die gleichen Schaltkreise verwenden. Bei den direkt ausführbaren Mikroinstruktionen handelt es sich aber um die zuvor genannten direkt ausführbaren einfachen Makroinstruktionen, die ebenfalls direkt im Benutzerprogramm auftreten.

Ein Benutzerprogramm besteht daher aus einer Folge von einfachen und komplexen Makroinstruktionen. Wenn die Befehle ausgeführt werden sollen, wird zuvor durch eine Prüfung des Operationscodes festgestellt, ob die gerade zu verarbeitende Instruktion eine solche ist, die direkt ausgeführt werden kann oder eine solche ist, die durch andere direkt ausführbare Instruktionen interpretiert werden muss. In Abhängigkeit von der Prüfung wird ein Schalter eingestellt, der die Instruktionssteuereinheit entweder auf die Mikro- oder Makrobetriebsart einstellt. Bei komplexen Makroinstruktionen wird eine Verzweigung zu einer Interpretationseinheit vorgenommen, die eine normale Mikroprogrammsteuerung mit einem Steuerspeicher und einer Instruktionsfolgesteuerung ist. Da alle Makroinstruktionen nun von der Instruktionsausführungs-Hardware ausgeführt werden können, werden die komplexen Makroinstruktionen, ähnlich wie die einfachen Makroinstruktionen, von der Interpretationseinheit zu der Befehlsausführungseinheit übertragen.

Der Nachteil einer solchen Anordnung besteht hauptsächlich darin, dass die Freizügigkeit und Flexibilität beim Entwurf der Prozessorarchitektur und des Befehlssatzes eingeschränkt ist, da zu sehr darauf geachtet werden muss, dass die einfachen Makroinstruktionen zu den komplexen Makroinstruktionen passen und umgekehrt. Ausserdem geht durch das Prüfen des Operationscodes auf komplexe oder einfache Makroinstruktionen Verarbeitungszeit verloren.

Aufgabe der vorliegenden Erfindung ist es, ein Steuerwerk für Prozessoren anzugeben, das sowohl flexibel hinsichtlich des Entwurfs von Befehlssätzen ist, als auch eine hohe Verarbeitungsgeschwindigkeit bei reduziertem Schaltkreisaufwand des Instruktionsdecodierers aufweist.

Gelöst wird diese Aufgabe durch die im Hauptanspruch genannten Merkmale.

Vorteilhafte Weiterbildungen und Ausgestaltungen des Gegenstandes der Erfindung sind den Unteransprüchen zu entnehmen.

Durch die Erfindung wird somit der Vorteil erreicht, dass für einen mikroprogrammgesteuerten Prozessor, der bestimmte Instruktionen direkt schaltkreisgesteuert ausführen kann, volle Entwurfsflexibilität hinsichtlich des Befehlssatzes besteht und ausserdem für die Ausführung anderer Instruktionen der Instruktionsdecodierer mit geringerem Aufwand an Logikkreisen realisierbar ist.

Im folgenden wird ein Ausführungsbeispiel der Erfindung anhand der beiliegenden Figuren erläutert. Es zeigen:

Fig. 1 das Blockschaltbild eines mikroprogrammgesteuerten Prozessors mit direkter hardwaregesteuerter Ausführung bestimmter Befehle mittels Einzelsteuerwörter,

Fig. 2 ein Signal-/Zeitdiagramm zur Darstellung des Betriebsablaufs in dem Prozessor nach Fig. 1,

Fig. 3 eine Prinzipdarstellung des Aufbaus der Steuerwörter,

Fig. 4 eine Prinzipdarstellung eines anderen Aufbaus der Steuerwörter,

Fig. 5 eine Prinzipdarstellung einer Steuerwortbelegung im Steuerspeicher bei Einzelwortsteuerung,

Fig. 6 ein Blockschaltbild eines mikroprogammgesteuerten Prozessors mit direkter Ausführung direkter Instruktionen mittels Mehrfachsteuerwörter,

Fig. 7 ein Signal-/Zeitdiagramm zur Darstellung des Betriebsablaufs in dem Prozessor nach Fig. 6,

Fig. 8 eine Darstellung des Aufbaus eines Steuerwortes bei Mehrfach-Steuerwortbetrieb,

Fig. 9 eine Prinzipdarstellung des in dem Prozessor nach Fig. 6 verwendeten Steuerspeicher-Adressenregisters,

Fig. 10 eine Darstellung der Belegung des Steuerspeichers bei Mehrfach-Steuerwortbetrieb,

Fig. 11 eine Darstellung zur Erläuterung der verwendeten Torschaltungen und

Fig. 12 ein Blockschaltbild des im Prozessor nach Fig. 6 verwendeten Maktrozykluszählers.

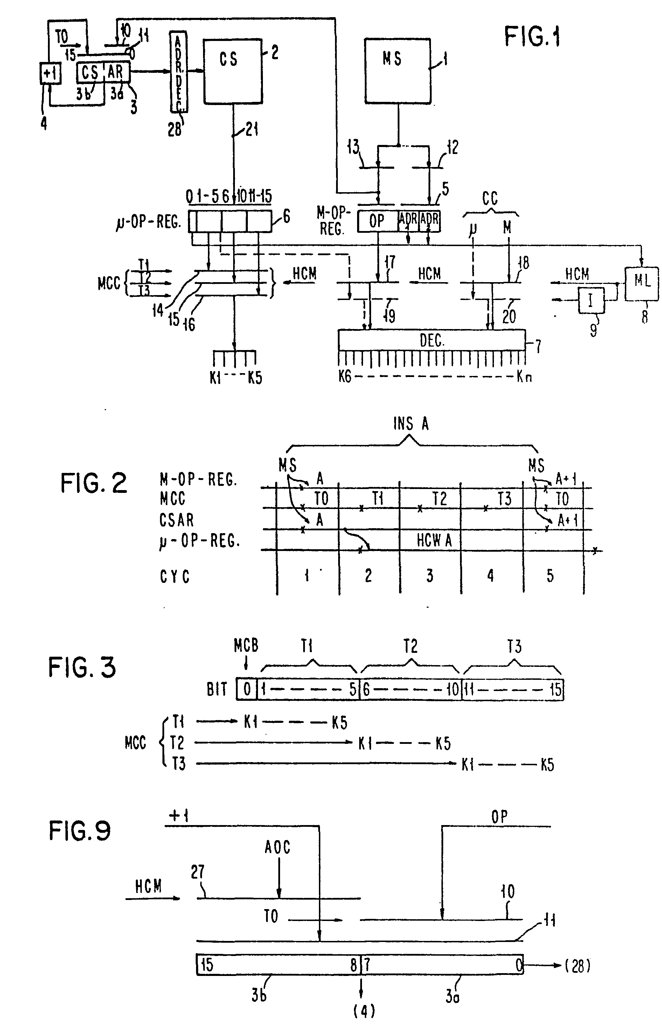

Fig. 1 zeigt einen Teil des Steuerwerkes eines mikroprogrammgesteuerten Prozessors, der über einen zusätzlichen Betriebsmodus verfügt, in dem er bestimmte Funktionen direkt hardwaregesteuert verarbeiten kann. Zu diesen direkt hardwaregesteuerten Funktionen zählen die Instruktionsphasen (I-Phasen) sowie bestimmte Ausführungsphasen (E-Phasen) von Instruktionen.

Im Hauptspeicher (MS) 1 sind in üblicher Weise die Benutzerprogramme und Daten gespeichert. Die Makroinstruktionen des Benutzerprogramms gelangen über einen Satz von Torschaltungen 12 und 13 in ein Makrooperationsregister (M-OP-REG) 5. Dieses Register verfügt über ein Speicherfeld für den Operationscode OP sowie über zwei Adressenfelder für die Adressen ADR1 und ADR2.

Bei der mikroprogrammgesteuerten Ausführung von Makroinstruktionen, die konventionell erfolgt und somit nicht ausführlich erläutert werden muss, gelangt der Operationscode gleichzeitig mit seiner Einspeicherung in das Makrooperationsregister 5 über eine Torschaltung 10 in das Steuerspeicher-Adressregister (CSAR) 3 und adressiert im Steuerspeicher (CS) 2 eine Speicherstelle, in der sich die Adresse der ersten Instruktion einer Mikroroutine befindet, mit deren Hilfe die Makroinstruktion verarbeitet wird. Die nachfolgenden Instruktionen, aus denen eine Mikroroutine besteht, werden mit Hilfe eines Adressmodifizierers 4, der die jeweils im Steuerspeicher-Adressregister 3 befindliche Adresse modifiziert und über die Torschaltung 11 in das Steuerspeicher-Adressregister 3 überträgt, aus dem Steuerspeicher 2 ausgelesen. Die aus dem Steuerspeicher 2 ausgelesenen Mikroinstruktionen gelangen nacheinander in ein Mikroinstruktions-Operationsregister (μ-OP-REG) 6 und werden dort über Torschaltungen 19 und 20 in den Operationsdecodierer (DEC) 7 übertragen, der an seinem Ausgang die Steuersignale Ki abgibt, die über (nicht dargestellte) Datenfluss-Steuertore die gewünschten Mikrooperationen steuern. Die Zuordnung der Datenfluss-Steuersignale zu den entsprechenden Instruktionszykluszeiten Ti erfolgt über nicht dargestellte Zykluszähler, die den einzelnen Instruktionszykluszeiten entsprechende Signale über die Tore 18 und 20 zum Operationsdecodierer 7 übertragen. In Fig. 1 ist schematisch dargestellt, wie die Ausgangssignale CC der nicht dargestellten Zykluszähler einerseits für die Mikroinstruktionen μ und andererseits für die Makroinstruktionen M zu dem Operationsdecodierer 7 übertragen werden. Der Signalverlauf für die an sich bekannte Mikroprogramm-Steuerung ist in Fig. 1 mit gestrichelten Linien dargestellt.

Das besondere des in Fig. 1 dargestellten Befehlssteuerwerkes ist, wie bereits eingangs erwähnt wurde, ein zusätzlicher Steuermodus, der diesem Befehlssteuerwerk gestattet, bestimmte Funktionen direkt hardwaregesteuert ablaufen zu lassen. Instruktionen, für die diese direkte Hardwaresteuerung aktiviert werden soll, enthalten ein auf binär 1 gesetztes Modussteuerbit MCB in der ersten Bitposition 0 des Instruktionsformats (Register 6). Ist dieses Modussteuerbit dagegen auf binär 0 gesetzt, dann ist dieser besondere Betriebsmodus deaktiviert, und das Steuerwerk arbeitet im bekannten Mikroinstruktionsbetrieb.

Ein auf binär 1 gesetztes Modussteuerbit MCB hat die Wirkung, dass ein Modusschalter (ML) 8 in den Hardware-Steuerbetrieb eingestellt wird, in welchem er an seinem Ausgang das entsprechende Signal HCM für den Hardware-Steuerungsbetrieb abgibt. Dieses Signal schaltet die Torschaltung 14 bis 18 durch bzw. bereitet deren Durchschaltung vor. Dadurch wird dem Operationsdecodierer 7 vorgegeben, ob (vertikal) Mikroinstruktionen oder eine direkt ausgeführte Makroinstruktion (horizontale Mikroinstruktion) ablaufen sollen.

Bei der direkten Ausführung von Makroinstruktionen wird der Steuerspeicher 2 für die Ausgabe von weiteren Mikroinstruktionen nicht benötigt. Es wird jedoch, wie üblich, mit dem Operationscode OP der Makroinstruktion als Adresse über die Torschaltung 10 und das Steuerspeicher-Adressenregister 3 adressiert. Im Hardware-Steuerbetrieb HCM wird an der adressierten Stelle im Steuerspeicher anstelle der Mikroinstruktion ein Hardware-Steuerwort HCW (horizontale Mikroinstruktion) ausgelesen und in das Mikroinstruktions-Operationsregister 6 übertragen. Wie Fig. 1 erkennen lässt, besteht ein Hardware-Steuerwort jeweils aus den Bits 0 bis 15, wobei hervorzuheben ist, dass diese Bits direkte Steuerbits oder Steuersignale K1 bis K5 des Datenflusses sind. Als direkte Steuersignale sind sie bezüglich ihrer Erzeugung sehr schnelle Steuersignale — da sie nicht, wie der Operationscode einer normalen Mikroinstruktion in einem mehrstufigen Logikprozess eines Operationsdecodierers decodiert werden müssen —, so dass sie sich für die Steuerung der ersten Zyklen, z.B. der Zyklen T1 bis T3, wie Fig. 1 zeigt, längerer Instruktionen eignen.

Direkt oder teilweise direkt gesteuerte Makroinstruktionen können somit schneller ausgeführt werden als nur rein (vertikal) mikroprogrammgesteuert ausgeführte Makroinstruktionen. Ausserdem lässt Fig. 1 erkennen, dass der Operationsdecodierer 7 einen einfacheren und preisgünstigeren Aufbau hat, da die ersten Steuersignale K1 bis K5 von insgesamt N Steuersignalen ohne Beteiligung des Operationsdecodierers 7 erzeugt werden. Die restlichen Steuersignale K6 bis KN werden vom Operationsdecodierer 7 aus der Decodierung des Operationscodes der Makroinstruktion, verknüpft mit den Zykluszeiten Ti des Makrozykluszählers (MCC) 31 erzeugt.

In Fig. 2 ist schematisch die Ausführung einer Instruktion im Einzelsteuerwortmodus des in Fig. 1 dargestellten Steuerwerkes gezeigt. Die Makroinstruktion INS A kommt aus dem Hauptspeicher (MS) 1 und wird in das Makrooperationsregister 5 geladen. Parallel dazu wird der Operationscode dieser Makroinstruktion in das Steuerspeicher-Adressenregister 3 gesetzt, und er adressiert dort ein Hardware-Steuerwort HCW. Gleichzeitig wird der Makrozykluszähler MCC auf T0 eingestellt. Dieses findet, wie Fig. 2 zeigt, im Zyklus CYC1 statt. Im Anschluss daran läuft der erste Zyklus der Instruktion INS A ab, und zwar gesteuert von der Zykluszeit T0 des Makrozykluszählers MCC.

Im Zyklus CYC2 wird das Hardware-Steuerwort HCW A in das Mikroinstruktions-Operationsregister 6 gesetzt. Dort bleibt es während der gesamten Laufzeit der Makroinstruktion gespeichert.

Das Format eines Hardware-Steuerwortes HCW zeigt Fig. 3. Das Bit 0 dient als Modussteuerbit MCB, das im Falle einer binären 0 das Steuerwerk in den normalen Mikrobefehls-Steuerbetrieb und im Falle einer binären 1 in den direkt hardwaregesteuerten Betrieb einstellt. Die Bits 1 bis 5 stellen die Steuersignale K1 bis K5 dar, wie sie zur Zykluszeit T1 des Makrozykluszählers MCC benötigt werden.

Die Bits 6 bis 10 entsprechend den gleichen Steuersignalen, jedoch zur Zykluszeit T2 des Makrozykluszählers.

Die Bits 11 bis 15 schliesslich sind der Zykluszeit T3 des Makrozykluszählers zugeordnet.

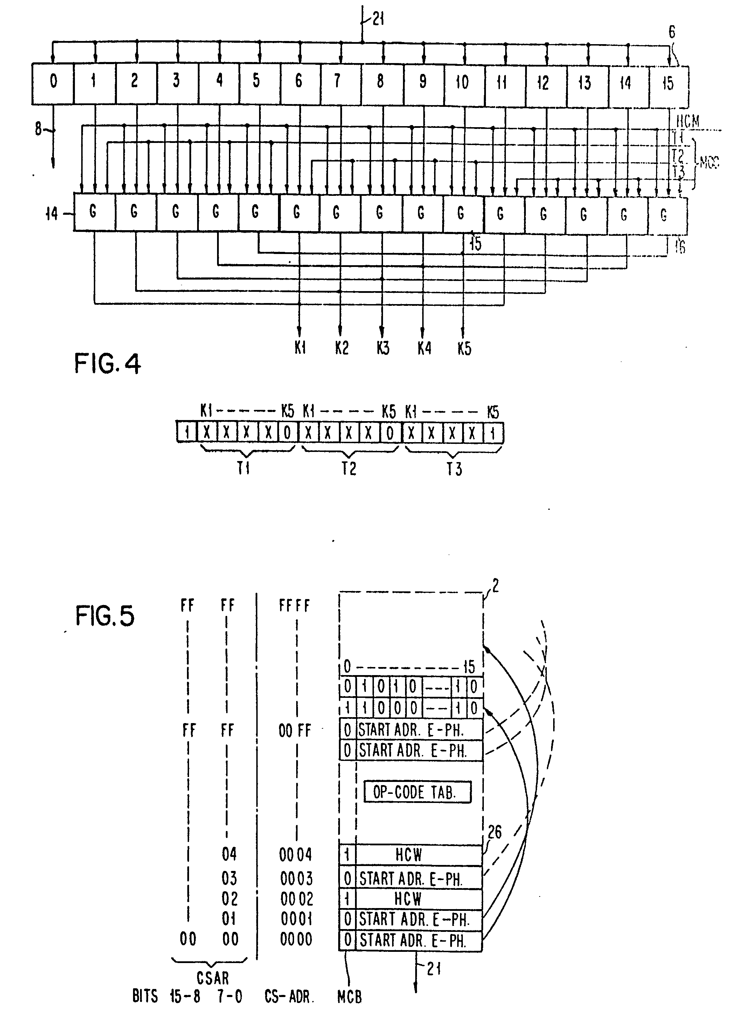

Die genannten Steuersignale werden jeweils an den Ausgängen der Torschaltungen 14, 15 und 16 zu den entsprechenden Taktzeiten T1 bis T3 zur Verfügung gestellt. Fig. 11 erläutert die in den Fig. 1, 6 und 9 gewählte Darstellungsweise der verwendeten Torschaltungen. Im Beispiel der Fig. 11 bestehen die Leitungen B und C jeweils aus drei individuellen Leitungsadern b1 bis b3 bzw. c1 bis c3. Jeder dieser Adern ist eine Toschaltung G zugeordnet, mit deren einem Eingang sie verbunden ist. Der jeweils zweite Eingang führt zu einer Taktsteuerleitung, an der ein den jeweiligen Zykluszeiten T1 oder T2 entsprechendes Signal anliegt. Für die zykluszeitengerechte Erzeugung der Steuersignale K1 bis K5 kann beispielsweise eine Einrichtung dienen, wie sie in Fig. 4 dargestellt ist. Nachdem die Einrichtung durch das Modussteuerbit MCB der Bitposition 0 des aus dem Steuerspeicher 2 ausgelesenen Hardware-Steuerwortes in den Hardware-Steuerbetrieb eingestellt wurde, und zwar mit Hilfe des Modusschalters 8, der an seinem Ausgang nun das Signal HCM für den Hardware-Steuerungsbetrieb erzeugt, können zur Zykluszeit T1 die Bits in den Positionen 1 bis 5 des Mikroinstruktions-Operationsregisters 6 über die Torschaltungsgruppe 14 an die Datenfluss-Steuertore angelegt werden. Im darauffolgenden Zyklus T2 des Makrozykluszählers MCC werden dann die in den Bitpositionen 6 bis 10 des Mikroinstruktions-Operationsregisters über die Torschaltungsanordnung 15 und danach zur Zykluszeit T3 die in den Bitpositionen 11 bis 15 des Mikroinstruktions-Operationsregisters 6 befindlichen Steuersignale über die Torschaltungsanordnung 16 zu den Steuertoren des Datenflusses des Prozessors übertragen.

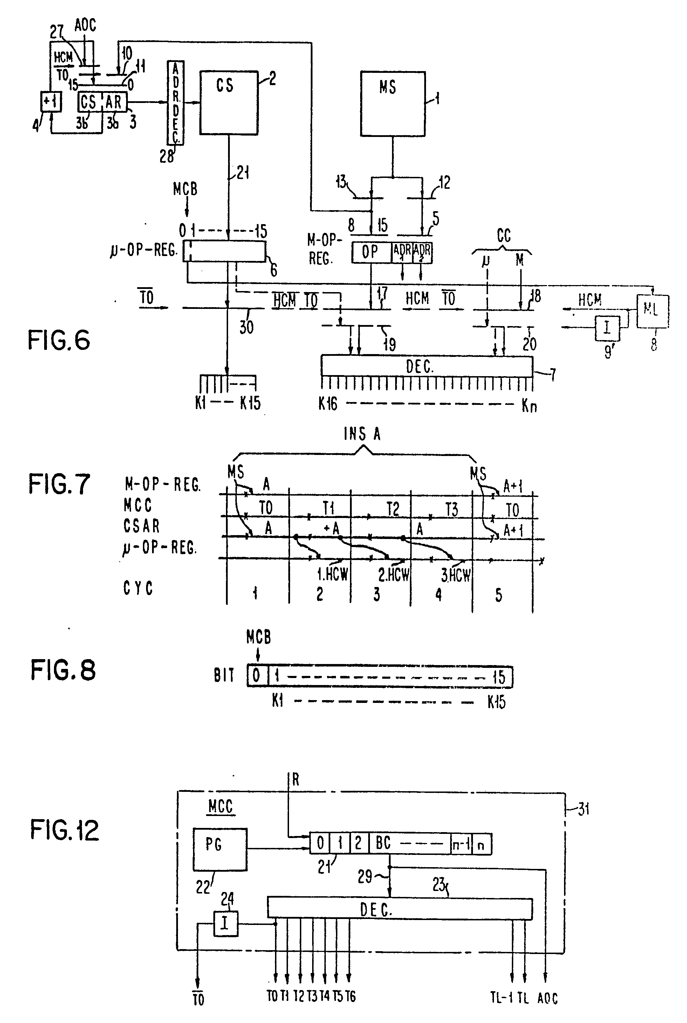

Im unteren Teil von Fig. 4 ist eine zykluszeitenbezogene Darstellung der Steuersignale K1 bis K5 zu sehen, aus welcher zu erkennen ist, dass beispielsweise das Steuersignal K5 zu den Zykluszeiten T1 bis T2 des Makrozykluszählers inaktiv (Bit = binär 0), zur Zykluszeit T3 jedoch aktiv (Bit = binär 1) ist. Die zuvor erläuterte Anordnung lässt sich mit Vorteil dann verwenden, wenn nur eine relativ kleine Anzahl von Steuersignalen erzeugt werden muss. Der Vorteil liegt hierbei darin, dass das benötigte Steuerwort für jede direkt auszuführende Instruktion sich in der Operationscodetabelle 26 im Steuerspeicher 2 befindet. Aufgrund der festen Verknüpfung zwischen dem Operationscode der Instruktion und der Adressierung der Operationscodetabelle bliebe dieser Platz ansonsten im Steuerspeicher 2, wie Fig. 5 zeigt, unbelegt, was für eine wirkungsvolle Ausnutzung der Speicherkapazität des Steuerspeichers 2 nachteilig wäre.

Beim Multi-Steuerwortbetrieb, der zweiten Betriebsart, die bei der direkten Instruktionsausführung möglich ist, wird zur Zykluszeit CYC1, wie Fig. 7 zeigt, analog zur ersten Betriebsart der Operationscode aus dem Makrooperationsregister 5, also dem Operationsregister für die Makrobefehle, das dem Hauptspeicher 1 nachgeschaltet ist, der Operationscode OP der Makroinstruktion in den Steuerspeicher gesetzt. Das adressierte Hardware-Steuerwort wird im Zyklus CYC2, also zur Zykluszeit T1 des Makrozykluszählers MCC in das Mikroinstruktions-Operationsregister 6 übernommen. Das Hardware-Steuerwort besteht wiederum aus dem Modussteuerbit MCB sowie weiteren 15 Bits, welche die Steuersignale K1 bis K15 bilden, wie die Fig. 6 und 8 zeigen. Diese 16 Steuersignale steuern gemeinsam mit den weiteren N-16 Steuersignalen, die vom Operationsdecodierer 7 aus der Decodierung des Operationscodes der Makroinstruktion gewonnen werden, den gesamten Datenfluss des Prozessors.

Die in den Fig. 1 und 6 dargestellte Aufteilung der direkt und indirekt (das soll hier heissen: durch Decodierung von OP) erzeugten Steuersignale ist nicht bindend und kann anhand der tatsächlichen Gegebenheiten eines realen Prozessors optimiert werden.

Wie Fig. 7 weiter zeigt, stellt bei Verarbeitung der Instruktion INS A das erste ausgelesene Hardware-Steuerwort (1. HCW) den Zustand der Steuersignale K1 bis K15 im Augenblick der Zykluszeit T1 des Makrozykluszählers MCC dar.

Das zweite Hardware-Steuerwort (2. HCW) spiegelt den Zustand der Steuersignale K1 bis K15 während der Zykluszeit T2 und das dritte Hardware-Steuerwort (3. HCW) dieselben Steuersignale zur Zykluszeit T3.

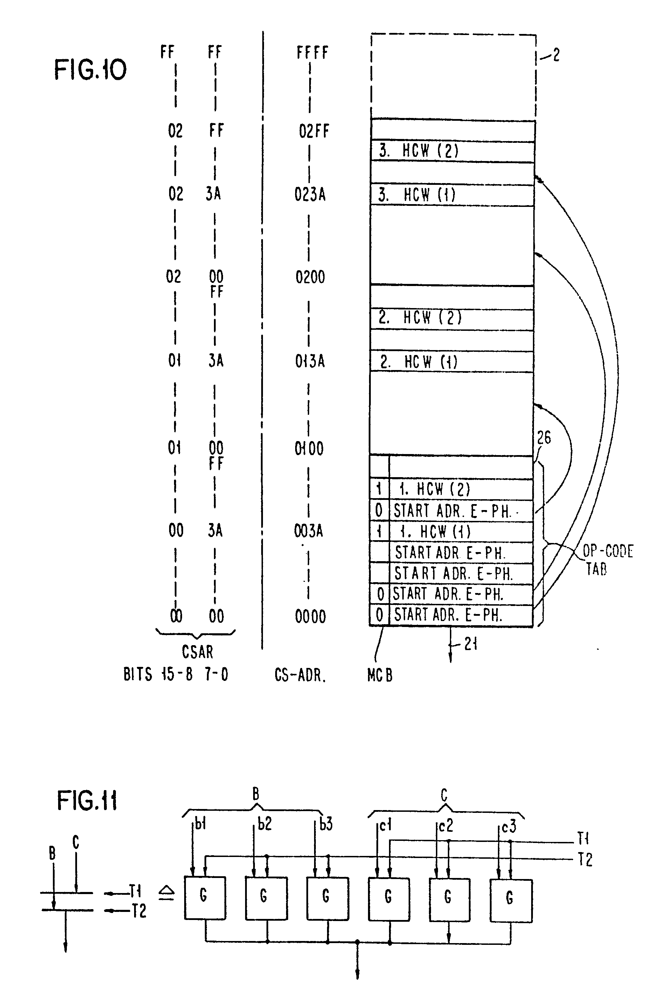

Die Adressenerzeugung für den Steuerspeicher 2 zum Abruf der obenerwähnten drei Hardware-Steuerwörter (1. HCW, 2. HCW, 3. HCW) geht deutlicher aus Fig. 9 hervor. Das Steuerspeicher-Adressenregister 3 besteht aus einem ersten Teil 3a zur Aufnahme der niedrigstelligen Adressbits 0 bis 7, die dem Operationscode OP entsprechen, sowie einem zweiten Teil 3b zur Speicherung der hochstelligen Adressbits 8 bis 15. Der 1 Byte breite Operationscode OP gelangt, wie bereits im Zusammenhang mit Fig. 1 erläutert wurde, vom Ausgang der Torschaltung 13 über die Torschaltung 10 in die Bitpositionen 0 bis 7 des Steuerspeicher-Adressenregisters 3 (Teil 3a). Die zusätzlichen Operationscodebits AOC gelangen über die Torschaltung 27, die von dem Steuersignal HCM für den Hardware-Steuerungsmodus gesteuert wird, als Adressbits in die Bitpositionen 8 bis 15 des Steuerspeicher-Adressregisters (Teil 3b).

Während beim Einzelsteuerwortmodus in der Operationscodetabelle 26 im Steuerspeicher 2 ausser den Startadressen der Mikroroutinen für die Ausführungsphase (E-PH) der Makroinstruktionen auch sämtliche Hardware-Steuerwörter HCW untergebracht sind, enthält im Multi-Steuerwortmodus die Codetabelle 26, wie Fig. 10 zeigt, jeweils nur die ersten Hardware-Steuerwörter 1. HCW (1), 1. HCW (2) ... neben den Startadressen für die Mikroroutinen, während die zweiten und dritten Steuerwörter 2. HCW (1), 2. HCW (2), 3. HCW (2) ... in einem anderen, durch die jeweiligen Adressen bestimmten Teil des Steuerspeichers 2 abgelegt sind. Dieses Verteilungsschema der Hardware-Steuerwörter ergibt sich daraus, dass es sich bei der aus dem Operationscode abgeleiteten Adresse für den Steuerspeicher um eine zusammengesetzte Adresse handelt, die aus dem 1 Byte breiten Operationscode mit den Hexadezimalwerten 00 bis FF und dem Byte des zusätzlichen Operationscodes AOC mit ebenfalls einem Byte von beispielsweise hexadezimal 00 bis FF besteht.

Fig. 7 zeigt nun den zeitlichen Ablauf in der Multisteuerwort-Betriebsart, bei der, ebenso wie bei der Einzel-Steuerwortbetriebsart im Befehlszyklus CYC1 zur Zykluszeit T0 der Operationscode, in gewählten Beispiel mit A bezeichnet, aus dem Hauptspeicher sowohl in das Makroinstruktions-Operationsregister 5, als auch in das Steuerspeicher-Adressenregister 3 eingelesen wird. Gleichzeitig wird diese Adresse vom Steuerspeicher-Adressdecodierer 28 decodiert und steht zur Selektion eines Steuerspeicherwortes zur Verfügung, so dass zur nächsten Zykluszeit T1 der Steuerspeicher 2 an der adressierten Stelle ausgelesen werden kann. Es sei in Fig. 7 angenommen, dass es sich um ein Hardware-Steuerwort handelt, gekennzeichnet durch ein auf 1 gesetztes Modussteuerbit MCB. Dieses sei beispielsweise das erste Hardware-Steuerwort HCW von insgesamt dreien, die zur Ausführung der betrachteten Instruktion INS A benötigt werden.

Im zweiten Instruktionszyklus CYC2 gelangt über die Torschaltung 27, gesteuert vom Hardware-Steuerungsmodussignal HCM, das erste zusätzliche Operationscodebyte AOC in das Steuerspeicher-Adressenregister 3, und zwar in den Registerteil 36. Dieses zusätzliche Operationscodebyte, gemeinsam mit dem Operationscode A, der im Steuerspeicher-Adressenregisterteil 3a für die Dauer der Ausführung der Instruktion INS A gespeichert bleibt, bilden die neue Adresse für das Auslesen des zweiten Hardware-Steuerwortes 2. HCW, das zur Zykluszeit T2 in das Mikroinstruktions-Operationsregister gelangt.

Das dritte und letzte Hardware-Steuerwort 3. HCW gelangt schliesslich zur Zykluszeit T3, wie Fig. 7 zeigt, in das Mikroinstruktions-Operationsregister.

In Fig. 12 ist nun schematisch dargestellt, wie beispielsweise die Zeittaktsignale erzeugt werden, welche die Zykluszeiten T0 bis TL repräsentieren. Ausserdem zeigt die Figur die Erzeugung der zusätzlichen Operationscodebytes AOC sowie des Steuersignals $\overline{T0}$. Es handelt sich bei der in Fig. 12 gezeigten Darstellung um ein Prinzipschaltbild des Makrozykluszählers MCC. Er besteht zunächst aus einem Impulsgenerator (PG) 22, dessen Ausgangsimpulse einen Binärzähler 21 steuern. Dieser Zähler verfügt über die Stufen 0 bis n, einen Rückstelleingang R sowie eine Ausgangsleitung 29, die den jeweiligen binären Zählerstand des Binärzählers 21 zu einem Decodierer (DEC) 23 überträgt.

Die zusätzlichen Operationscodebytes AOC entsprechen den jeweiligen binären Werten des Zählerstandes des Binärzählers 21. Das Steuersignal $\overline{T0}$, das beispielsweise zur Steuerung der Torschaltung 30 in Fig. 6 benötigt wird, wird aus dem der Zykluszeit T0 entsprechenden Ausgangssignal des Decodierers 23 durch Inversion im Inverter (I) 24 gewonnen.

Die Erzeugung der zusätzlichen Operationscodebytes ist auch auf andere Weise möglich, beispielsweise dadurch, dass der Adressmodifizierer 4 hierzu mitverwendet wird und Überträge aus dem niedrigstelligen Adressbyte in das hochstellige eingesetzt werden.

Die in den Fig. 1 und 6 dargestellte Schaltungsanordnung erlaubt es somit im Einzel- oder Multisteuerwort-Betrieb mit dem Operationscode einer Makroinstruktion als Adresse aus einem Steuerspeicher nicht nur Mikrobefehle auszulesen, die nach Decodierung in einem geeigneten Decodierer die Steuersignale des Datenflusses eines Prozessors erzeugen, sondern auch die zuletztgenannten Steuersignale direkt abzurufen. Der Steuerspeicher 2 enthält somit in gemischter Folge Mikroinstruktionen und direkte Datenfluss-Steuersignale.

Dies hat zur Folge, dass bei kurzen Makroinstruktionen, wie beispielsweise RR Instruktionen im bekannten IBM System/370 (RR = Register zu Register) nur direkte Steuersignale aus dem Steuerspeicher ausgelesen werden. Da die direkt erzeugten Steuersignale, da sie nicht aufgrund eines Decodierungsprozesses gewonnen werden, sehr schnelle Steuersignale sind, eignen sie sich besonders, um schnell benötigte Werte bei der Befehlsausführung zur Verfügung zu stellen, wie beispielsweise bei der Adressrechnung bei RX- oder SS-Instruktionen (RX = Register zu Indexregister oder SS = Speicher zu Speicher).

Instruktionen ab etwa der Länge von 4 Zykluszeiten werden mit Hilfe von gemischt erzeugten Datenfluss-Steuersignalen erzeugt, wobei die ersten, wie bereits erläutert wurde, direkt und der Rest in konventioneller Weise durch Decodierung erzeugt werden. In der reinen Software-Betriebsart werden, wie allgemein üblich, alle Steuersignale durch Decodierung der Mikroinstruktions-Operationscodes gewonnen.

**Patentansprüche**

1. Einrichtung in der Steuereinheit eines mikroprogrammgesteuerten Prozessors zur direkten hardwaregesteuerten Ausführung bestimmter Instruktionen, mit einem Steuerspeicher (2), einer Steuerspeicheradressierung (3, 4, 28), einem Mikroinstruktions-Operationsregister (6) und einem Instruktionsdecodierer (7), dadurch gekennzeichnet, dass die im Steuerspeicher (2) befindlichen Steuerwörter (HCW), die direkt auszuführenden Instruktionen zugeordnet sind, ein Kennzeichen (MCB) mitführen, das im gesetzten Zustand vor der Instruktionsausführung einen Schalter (8) in einen Hardware-Steuerungsbetrieb umschaltet, in welchem er die Bits des aus dem Steuerspeicher ausgelesenen Steuerwortes nicht wie im ungesetzten Zustand dem Instruktionsdecodierer (7), sondern als direkte Steuersignale (K1 bis K5) den Datenfluss-Steuerelementen unmittelbar zuführt.

2. Einrichtung nach Anspruch 1, dadurch gekennzeichnet, dass zur direkten Ausführung einer komplexeren Instruktion, die eine grössere Anzahl von Steuersignalen (K1 bis KN) benötigt, der Operationscode (OP) der Instruktion in ein Mikroinstruktions-Operationsregister (5) und parallel dazu in die Steuerspeicheradressierung (3, 4, 28) übertragen wird, dass ferner bei umgeschaltetem Schalter (8) während bestimmter erster Zykluszeiten (z.B. T1, T2, T3, ...) der Instruktion die Bits des aus dem Steuerspeicher (2) ausgelesenen Steuerwortes (HCW) als direkte Steuersignale den Datenfluss-Steuerelementen unmittelbar zugeführt werden und dass während der übrigen Zykluszeiten (z.B. T4 bis TL) der Instruktion aus dem Operationscode durch Decodierung im Instruktionsdecodierer (7) erzeugte Steuersignale (K6 bis KN) zu den Datenfluss-Steuerelementen übertragen werden.

3. Einrichtung nach Anspruch 1, dadurch gekennzeichnet, dass zur direkten Instruktionsausführung mittels eines Steuerwortes (HCW) der Operationscode (OP) der Instruktion zur ersten Zykluszeit (T0) des Instruktionszyklus in an sich bekannter Weise als Adresse in das Steuerspeicher-Adressregister (3) übertragen und das adressierte Steuerwort (HCW) aus dem Steuerspeicher (2) in das Mikroinstruktions-Operationsregister (6) eingegeben wird, dass ferner das Kennzeichen (MCB) zu dem Schalter (8) übertragen wird, so dass dieser in den Hardware-Steuerungsbetrieb umgeschaltet wird, in dem er an seinem Ausgang ein Torsteuersignal (HCM) erzeugt, das ein oder mehrere Torschaltungen (14 bis 16) für eine Durchschaltung vorbereitet und dass schliesslich jede der Torschaltungen (14 bis 16) eine bestimmte Bitgruppe (1 bis 5, 6 bis 10, 11 bis 15) des im Mikroinstruktions-Operationsregister befindlichen Steuerwortes während bestimmter erster Zykluszeiten (z.B. T1, T2, T3, ...) als Steuersignale (K1 bis K5) unmittelbar zu den Datenfluss-Steuerelementen überträgt.

4. Einrichtung nach Anspruch 2, dadurch gekennzeichnet, dass zur direkten Instruktionsausführung mittels eines Steuerwortes (HCW) einer komplexeren Instruktion, die eine grössere Anzahl von Steuersignalen benötigt, der Operationscode (OP) der Instruktion zur ersten Zykluszeit (T0) des Instruktionszyklus in an sich bekannter Weise als Adresse in das Steuerspeicher-Adressregister (3) übertragen und das adressierte Steuerwort (HCW) aus dem Steuerspeicher (2) in das Mikroinstruktions-Operationsregister (6) eingegeben wird, dass ferner das Kennzeichen (MCB) zu dem Schalter (8) übertragen wird, so dass dieser in den Hardware-Steuerungsbetrieb umgeschaltet wird, in dem er an seinem Ausgang ein Torsteuersignal (HCM) erzeugt, das ein oder mehrere Torschaltungen (14 bis 16) für eine Durchschaltung vorbereitet und dass schliesslich jede der Torschaltungen (14 bis 16) eine bestimmte Bitgruppe (1 bis 5, 6 bis 10, 11 bis 15) des im Mikroinstruktions-Operationsregister befindlichen Steuerwortes während bestimmter erster Zykluszeiten (z.B. T1, T2, T3, ...) als Steuersignale (K1 bis K5) unmittelbar zu den Datenfluss-Steuerelementen überträgt und dass während der übrigen Zykluszeiten (T4 bis TL) der Instruktion die übrigen Steuersignale (K16 bis KN) aus dem Operationscode, der in der ersten Zykluszeit (T0) auch in das Makroinstruktions-Operationsregister (5) eingegeben wurde, erzeugt werden, indem dieser aus dem Makroinstruktions-Operationsregister mittels einer von dem Torsteuersignal (HCM) durchgeschalteten Torschaltung (17) zusammen mit den übrigen Zykluszeiten, die über eine, ebenfalls von dem Torsteuersignal durchgeschaltete, weitere Torschaltung (18) geleitet werden, zu dem Instruktionsdecodierer (7) übertragen werden, der an seinem Ausgang die übrigen Steuersignale (K16 bis KN) bereitstellt.

5. Einrichtung nach Anspruch 1, dadurch gekennzeichnet, dass zur direkten Ausführung einer Instruktion mittels mehrerer Steuerwörter (1. HCW, 2. HCW, ...) der Operationscode (OP) der Instruktion zur ersten Zykluszeit (T0) des Instruktionszyklus in an sich bekannter Weise in das Steuerspeicher-Adressregister (3) übertragen und das erste Steuerwort (1. HCW) aus dem Steuerspeicher (2) in das Mikroinstruktions-Operationsregister (6) eingegeben wird, dass ferner das Kennzeichen (MCB) zu dem Schalter (8) übertragen wird, so dass dieser in den Hardware-Steuerungsbetrieb umgeschaltet wird, indem er an seinem Ausgang das Torsteuersignal (HCM) erzeugt, das mehrere Torschaltungen (17, 18, 27, 30) durchschaltet, dass ferner während bestimmter erster Zykluszeiten (z.B. T1, T2, T3, ...) jeweils ein zusätzliches Operationscodebyte (AOC) über eine vom Torsteuersignal durchgeschaltete Torschaltung (27) in das Steuerspeicher-Adressregister übertragen wird, so dass dieses gemeinsam mit dem im Steuerspeicher-Adressregister verbleibenden Operationscode die Adresse für das Auslesen des jeweils zweiten, dritten, ... Steuerwortes (2. HCW, 3. HCW, ...) bildet, welche Steuerwörter somit sequentiell in das Mikroinstruktions-Operationsregister (6) und von dort als auf die Zykluszeiten (T1, T2, T3, ...) bezogene Steuersignale (K1 bis K15) zu den Datenfluss-Steuerelementen gelangen.

6. Einrichtung nach Anspruch 2, dadurch gekennzeichnet, dass zur direkten Ausführung einer Instruktion mittels mehrerer Steuerwörter (1. HCW, 2. HCW, ...) der Operationscode (OP) der Instruktion zur ersten Zykluszeit (T0) des Instruktionszyklus in an sich bekannter Weise in das Steuerspeicher-Adressregister (3) übertragen und das erste Steuerwort (1. HCW) aus dem Steuerspeicher (2) in das Mikroinstruktions-Operationsregister (6) eingegeben wird, dass ferner das Kennzeichen (MCB) zu dem Schalter (8) übertragen wird, so dass dieser in den Hardware-Steuerungsbetrieb umgeschaltet wird, in dem er an seinem Ausgang das Torsteuersignal (HCM) erzeugt, das mehrere Torschaltungen (17, 18, 27, 30) durchschaltet, dass ferner während bestimmter erster Zykluszeiten (z.B. T1, T2, T3, ...) jeweils ein zusätzliches Operationscodebyte (AOC) über eine vom Torsteuersignal durchgeschaltete Torschaltung (27) in das Steuerspeicher-Adressregister übertragen wird, so dass dieses gemeinsam mit dem im Steuerspeicher-Adressregister verbleibenden Operationscode die Adresse für das Auslesen des jeweils zweiten, dritten, ... Steuerwortes (2. HCW, 3. HCW, ...) bildet, welche Steuerwörter somit sequentiell in das Mikroinstruktions-Operationsregister (6) und von dort als auf die Zykluszeiten (T1, T2, T3, ...) bezogene Steuersignale (K1 bis K15) zu den Datenfluss-Steuerelementen gelangen und dass schliesslich während der übrigen Zykluszeiten (z.B. T4 bis TL) der Instruktion die übrigen Steuersignale (K16 bis KN) aus dem Oberationscode, der in der ersten Zykluszeit (T0) auch in das Makroinstruktions-Operationsregister (5) eingegeben wurde, erzeugt werden, in dem dieser aus dem Makroinstruktions-Operationsregister mittels einer von dem Torsteuersignal (HCM) durchgeschalteten Torschaltung (17) zusammen mit den übrigen Zykluszeiten, die über eine, ebenfalls von dem Torsteuersignal durchgeschaltete, weitere Torschaltung (18) geleitet werden, zu dem Instruktionsdecodierer (7) übertragen werden, der an seinem Ausgang die übrigen Steuersignale (K16 bis KN) bereitstellt.

7. Einrichtung nach einem der vorhergehenden Ansprüche, dadurch gekennzeichnet, dass, mit Ausnahme der ersten Zykluszeit (T0), die für die Bereitstellung des Operationscodes (OP) für die Steuerspeicheradressierung (3, 4, 28) und für die Decodierung (5, 7) benötigt wird, die Steuersignale (K1 bis KN) gemeinsam, sowohl während bestimmter erster (z.B. T1, T2, T3, ...) als auch während der übrigen (z.B. T4 bis TL) Zykluszeiten erzeugt werden.

8. Einrichtung nach einem oder mehreren der vorhergehenden Ansprüche, dadurch gekennzeichnet, dass der Operationscode (OP) für die gesamte Dauer der Ausführung einer direkt auszuführenden Instruktion im Steuerspeicher-Adressregister (3) und gegebenenfalls im Makroinstruktions-Operationsregister (5) gespeichert bleibt.

9. Einrichtung nach einem der Ansprüche 5 bis 9, dadurch gekennzeichnet, dass die zusätzlichen Operationscodebytes (AOC) am Ausgang (29) eines binären Zykluszählers (21) entnommen und zu dem Steuerspeicher-Adressregister (3) übertragen werden.

## Claims

1. Arrangement in the control unit of a microprogram-controlled processor for the direct hardware-controlled execution of particular instructions, comprising a control storage (2) control storage adress registers (3, 4, 28), a micro instruction operation register (6), and an instruction decoder (7), characterized in that the control words (HCW), contained in the control storage (2) and associated with instructions to be directly executed, comprise a mode control bit (MCB) which, if set, causes a mode latch (8) to be switched to a hardware control mode prior to instruction execution, in which mode the bits of the control word read from the control storage, instead of being fed to the instruction decoder (7), as in the case when the mode control bit (MCB) is not set, are fed as direct control signals (K1 to K5) to the data flow control elements.

2. Arrangement according to claim 1, characterized in that for directly executing a more complex instruction, requiring a greater number of control signals (K1 to KN), the operation code (OP) of the instruction is fed to a microinstruction operation register (5) and parallel thereto to the control storage address registers (3, 4, 28), that furthermore, after the mode latch (8) has been set, the bits of the control word (HCW), read from control storage (2), are immediately fed as direct control signals to the data flow control elements at particular first cycle times (e.g. T1, T2, T3, ...), and that during the remaining cycle times (e.g. T4 to TL) of the instruction, control signals (K6 to KN), generated from the operation code by decoding in the instruction decoder (7), are fed to the data flow control elements.

3. Arrangement according to claim 1, characterized in that for direct instruction execution by means of a control word (HCW), the operation code (OP) of the instruction is fed at the first cycle time (T0) of the instruction cycle in a manner known per se as an address to the control storage address register (3), and the addressed control word (HCW) from the control storage (2) is entered into the micro instruction operation register (6), that furthermore the mode control bit (MCB) is fed to the mode latch (8), setting this latch to the hardware control mode in which it generates at its output a gate control signal (HCM) enabling one or several gate circuits (14 to 16) to switch, and that finally at particular first cycle times (e.g. T1, T2, T3, ...), each of the gate circuits (14 to 16) directly transfers a particular bit group (1 to 5, 6 to 10, 11 to 15) of the control word, contained in the micro instruction operation register, as control signals (K1 to K5) to the data flow control elements.

4. Arrangement according to claim 2, characterized in that for directly executing by means of a control word (HCW) a more complex instruction requiring a greater number of control signals, the operation code (OP) of the instruction is fed at the first cycle time (T0) of the instruction cycle in a manner known per se as an address to the control storage register (3), and the addressed control word (HCW) is fed from the control storage (2) into the micro instruction operation register (6), that furthermore the mode control bit (MCB) is fed to the mode latch (8), setting the latter to the hardware control mode in which it generates a gate control signal (HCM) at its output, enabling one or several gate circuits (14 to 16) to switch, and that finally, at particular first cycle times (e.g. T1, T2, T3, ...), each of the gate circuits (14 to 16) directly transfers one particular bit group (1 to 5, 6 to 10, 11 to 15) of the control word, contained in the micro instruction operation register, as control signals (K1 to K5) to the data flow control elements, and that at the remaining cycle times (T4 to TL) of the instruction the remaining control signals (K16 to KN) are generated from the operation code, entered into the macro instruction operation register (5) at the first cycle time (T0), by the operation code along with the remaining cycle times, transferred through a further gate circuit (18) enabled by the gate control signal, being fed by means of a gate circuit (17), switched by the gate control signal (HCM), from the macro instruction operation register to the instruction decoder (7) supplying the remaining control signals (K16 to KN) at its output.

5. Arrangement according to claim 1, characterized in that for directly executing an instruction by means of several control words (1st HCW, 2nd HCW, ...), the operation code (OP) of the instruction is fed at the first cycle time (T0) of the instruction cycle in a manner known per se to the control storage address register (3), and the first control word (1st HCW) is entered from the control storage (2) into the micro instruction operation register (6), that furthermore the mode control bit (MCB) is fed to the mode latch (8), setting the latter to the hardware control mode in which it generates at its output the gate control signal (HCM) enabling several gate circuits (17, 18, 27, 30), that furthermore at particular cycle times (e.g. T1, T2, T3, ...), one additional operation code byte (AOC) each is fed through a gate circuit (27), enabled by the gate control signal, to the control storage address register, so that this operation code byte together with the operation code remaining in the control storage address register forms the address for reading the respective second, third ... control word (2nd HCW, 3rd HCW, ...), the control words being sequentially fed to the micro instruction operation register (6) from where they are transferred as control signals (K1 to K15), related to the cycle times (T1, T2, T3, ...), to the data flow control elements.

6. Arrangement according to claim 2, characterized in that for directly executing an instruction by means of several control words (1st HCW, 2nd HCW, ...), the operation code (OP) of the instruction is fed at the first cycle time (TO) of the instruction cycle in a manner known per se to the control storage address register (3), and the first control word (1st HCW) is fed from the control storage (2) to the micro instruction operation register (6), that furthermore the mode control bit (MCB) is fed to the mode latch (8), setting the latter to the hardware control mode in which it generates at its output the gate control signal (HCM) enabling several gate circuits (17, 18, 27, 30), that furthermore at particular first cycle times (e.g. T1, T2, T3, ...), one additional operation code byte (AOC) each is fed through a gate circuit (27), enabled by the gate control signal, to the control storage address register, so that this operation code byte together with the operation code remaining in the control storage address register forms the address for reading the respective second, third, ... control word (2nd HCW, 3rd HCW, ...), the control word being sequentially fed to the micro instruction operation register (6) from where they are transferred as control signals (K1 to K15), related to the cycle times (T1, T2, T3, ...), to the data flow control elements, and that finally at the remaining cycle times (e.g. T4 to TL) of the instruction, the remaining control signals (K16 to KN) are generated from the operation code, entered into the macro instruction operation register (5) at the first cycle time (TO), by the operation code along with the remaining cycle times, transferred through a further gate circuit (18) enabled by the gate control signal, being fed by means of a gate circuit (17), switched by the gate control signal (HCM), from the macro instruction operation register to the instruction decoder (7) supplying the remaining control signal (K16 to KN) at its output.

7. Arrangement according to any one of the preceding claims, characterized in that with the exception of the first cycle time (TO), necessary for providing the operation code (OP) for the control storage address register (3, 4, 28) and for decoding (5, 7), the control signals (K1 to KN) are generated jointly both at particular first cycle times (e.g. T1, T2, T3, ...) and at the remaining cycle times (e.g. T4 to TL).

8. Arrangement according to any one of the preceding claims, characterized in that the operation code (OP) for the entire duration of an instruction to be directly executed is buffered in the control storage address register (3) and, if necessary, in the macro instruction operation register (5).

9. Arrangement according to any one of the claims 5 to 8, characterized in that the additional operation code bytes (AOC) are supplied at the output (29) of a binary cycle counter (21) and are fed to the control storage address register (3).

## Revendications

1. Dispositif situé dans l'unité de commande d'un processeur microprogrammé, pour l'exécution directe, commandée par le matériel, d'instructions déterminées, comportant une mémoire de commande (2), un dispositif (3, 4, 28) d'adressage de la mémoire de commande, un registre (6) d'opérations de micro-instructions et un décodeur (7) de micro-instructions, caractérisé en ce que les mots de commande (HCW), qui sont situés dans la mémoire de commande (2) et qui sont associés à des instructions devant être exécutées directement, transmettent un signal caractéristique (MCB) qui commute un commutateur (8) à l'état positionné, avant l'exécution d'une instruction, sur le mode de fonctionnement commandé par le matériel, selon lequel le commutateur envoie les bits du mot de commande lu hors de la mémoire de commande non pas, comme dans l'état non positionné, au décodeur d'instructions (7), mais directement en tant que signaux directs de commande (K1 à K5) aux éléments de commande du flux de données.

2. Dispositif selon la revendication 1, caractérisé en ce que pour l'exécution directe d'une instruction plus complexe, qui nécessite un nombre plus important de signaux de commande (K1 à KN), le code opération (OP) de l'instruction est transmis dans un registre (5) d'opérations de macro-instructions, parallèlement à cela, dans le dispositif (3, 4, 28) d'adressage de la mémoire de commande, et qu'en outre, alors que le commutateur (8) est commuté, les bits du mot de commande (HCW), qui sont lus hors de la mémoire de commande (2) sont envoyés directement sous la forme de signaux directs de commande aux éléments de commande du flux de données, pendant des premiers intervalles de temps déterminés (par exemple T1, T2, T3, ...) du cycle de l'instruction, et que des signaux de commande (K6 à KN), qui sont produits par décodage à partir du code opération dans le décodeur d'instructions (7), sont transmis aux éléments de commande du flux de données pendant les autres intervalles de temps (par exemple T4 à TL) du cycle de l'instruction.

3. Dispositif selon la revendication 1, caractérisé en ce que pour l'exécution directe d'une instruction à l'aide d'un mot de commande (HCW) le code opération (OP) de l'instruction pour la première durée (TO) du cycle de l'instruction est transmis, de façon connue en soi, en tant qu'adresse dans le registre d'adresses (3) de la mémoire de commande et le mot de commande (HCW) adressé est introduit depuis la mémoire de commande (2) dans le rregistre (6) d'opérations de micro-instructions, qu'en outre le signal caractéristique (MCB) est transmis au commutateur (8) de telle sorte que ce dernier est commuté dans le fonctionnement de commande par le matériel, lors duquel il délivre à sa sortie un signal de commande de porte (HCM), qui prépare un ou plusieurs circuits de porte (14 à 16) en vue de les rendre passants et qu'enfin chacun des circuits de portes (14 à 16) transmet directement aux éléments de commande du flux de données un groupe déterminé de bits (1 à 5, 6 à 10, 11 à 15) du mot de commande situé dans le registre d'opérations des micro-instructions, pendant des premiers intervalles de temps déterminés (par exemple T1, T2, T3, ...) du cycle.

4. Dispositif selon la revendication 2, caractérisé en ce que pour lexécution directe d'instructions, au moyen d'un mot de commande (HCW) d'une instruction plus complexe qui requiert un nombre supérieur de signaux de commande, le code opération (OP) de l'instruction est transmis de façon connue en soi en tant qu'adresse dans le registre d'adresses (3) de la mémoire de commande pendant le premier intervalle de temps (TO) du cycle de l'instruction, et le mot de commande (HCW) adressé est introduit à partir de la mémoire de commande (2) dans le registre (6) d'opérations des micro-instructions, qu'en outre le signal caractéristique (MCB) est transmis au commutateur (8) de sorte que ce dernier est commuté sur le fonctionnement de commande par le matériel, selon lequel il produit à sa sortie un signal de commande de porte (HCM) qui prépare un ou plusieurs circuits de portes (14 à 16) en vue de les rendre passants et qu'enfin chacun des circuits de portes (14 à 16) transmet directement aux éléments de commande du flux de données un groupe déterminé de bits (1 à 5, 6 à 10, 11 à 15) du mot de commande situé dans le registre d'opérations des micro-instructions, en tant que signaux de commande (K1 à K5), pendant des premiers intervalles de temps déterminés (par exemple T1, T2, T3, ...) du cycle, et que pendant les autres intervalles de temps (T4 à TL) du cycle de l'instruction, les autres signaux de commande (K16 à KN) sont produits à partir du code opération, qui a été introduit également dans le registre (5) d'opérations des macro-instructions, pendant le premier intervalle de temps (TO) du cycle, par le fait que ce code opération a été transmis à partir du registre d'opérations des macro-instructions au moyen d'un circuit de porte (17) rendu passant par le signal de commande de porte (HCM), ainsi que les autres intervalles de temps du cycle, qui sont transmis par l'intermédiaire d'un autre circuit de porte (18) également rendu passant par le signal de commande de porte, au décodeur d'instructions (7), qui délivre à sa sortie les autres signaux de commande (K16 à KN).

5. Dispositif selon la revendication 1, caractérisé en ce que pour l'exécution directe d'une instruction à l'aide de plusieurs mots (1. HCW, 2. HCW, ...), le code opération (OP) de l'instruction est transmis de façon connue en soi dans le registre d'adresses (3) de la mémoire de commande pendant le premier intervalle de temps (TO) du cycle de l'instruction, et le premier mot de commande (1. HCW) est introduit d'après le registre de commande (2) dans le registre (6) d'opérations des micro-instructions, qu'en outre le signal caractéristique (MCB) est transmis au commutateur (8) de telle sorte que ce dernier est commmuté sur le fonctionnement avec commande par le matériel, selon lequel il délivre à sa sortie le signal de commande de porte (HCM) qui rend passants plusieurs circuits de portes (17, 18, 27, 30), qu'en outre pendant des premiers intervalles de temps déterminés du cycle (par exemple T1, T2, T3, ...), respectivement à un octet supplémentaire (AOC) du code opération est transmis par l'intermédiaire d'un circuit de porte (27) rendu passant par le signal de commande de porte dans le registre d'adresses de la mémoire de commande de sorte que cet octet forme, en commun avec le code opération subsistant dans le registre d'adresses de la mémoire de commande, l'adresse pour la lecture des second, troisième, ... mots de commande respectifs (2. HCW, 3. HCW, ...), lesquels mots de commande parviennent par conséquent successivement dans le registre (6) d'opérations des micro-instructions et parviennent, à partir de là, en tant que signaux de commande (K1 à K15), rapportés aux intervalles de temps du cycle (T1, T2, T3, ...) aux éléments de commande du flux de données.

6. Dispositif selon la revendication 2, caractérisé en ce que pour l'exécution directe d'une instruction, au moyen de plusieurs mots de commande (1. HCW, 2. HCW, ...), le code opération (OP) de l'instruction est transmis de façon connue en soi dans le registre d'adresses (3) de la mémoire de commande pendant le premier intervalle de temps (TO) du cycle de l'instruction et que le premier mot de commande (1. HCW) est introduit depuis la mémoire de commande (2) dans le registre (6) d'opérations des micro-instructions, qu'en outre le signal caractéristique (MCB) est transmis au commutateur (8) de sorte que ce dernier est commuté sur le fonctionnement de commande exécuté par le matériel, selon lequel il produit à sa sortie le signal de commande de porte (HCM), que plusieurs circuits de portes (17, 18, 27, 30) sont rendus passants, qu'en outre pendant des premiers intervalles de temps du cycle (par exemple T1, T2, T3, ...), respectivement un octet supplémentaire du code opération (AOC) est transmis par l'intermédiaire d'un circuit de porte (27), rendu passant par le signal de commande de porte, dans le registre d'adresses de la mémoire de commande de sorte que cet octet forme, en commun avec le code opération subsistant dans le registre d'adresses de la mémoire de commande, l'adresse pour la lecture des second, troisième, ... mots de commande respectifs (2. HCW, 3. HCW, ...), lesquels mots de commande parviennent par conséquent successivement dans le registre (6) d'opérations des micro-instructions et parviennent, à partir de là, en tant que signaux de commande (K1 à K15), rapportés aux intervalles de temps (T1, T2, T3, ...) du cycle, aux éléments de commande du flux de données et qu'enfin pendant les autres intervalles de temps (par exemple T4 à TL) du cycle de l'instruction, les autres signaux de commande (K16 à KN) sont produits à partir du code opération, qui a été introduit également, pendant le premier intervalle de temps (TO) du cycle, dans le registre (5) d'opérations des macro-instructions, dans lequel le code opération est transmis à partir du registre d'opérations des micro-instructions, au moyen d'un circuit de porte (17) rendu passant par le signal de commande de porte (HCM), ainsi que les autres intervalles de temps du cycle qui sont envoyés par l'intermédiaire d'un autre circuit de portes (18) rendu également passant par le signal de commande de porte, au décodeur d'instructions (7) qui prépare sur sa sortie les autres signaux de commande (K16 à KN).

7. Dispositif selon l'une des revendications précédentes, caractérisé en ce que, à l'exception du premier intervalle de temps (TO) du cycle, qui est nécessaire pour la préparation du code opération (OP) pour le dispositif (3, 4, 28) d'adressage de la mémoire de commande et pour le dispositif de décalage (5, 7), les signaux (K1 à KN) sont produits en commun aussi bien pendant des premiers intervalles de temps déterminés (T1, T2, T3, ...) que pendant les autres intervalles de temps (par exemple T4 à TL) du cycle.

8. Dispositif selon une ou plusieurs des revendications précédentes, caractérisé en ce que le code opération (OP) pour l'ensemble de la durée de l'exécution d'une instruction, devant être exécutée directement reste mémorisée dans le registre d'adresses (3) de la mémoire de commande et éventuellement dans le registre (5) d'opérations des macro-instructions.

9. Dispositif selon l'une des revendications 5 à 9, caractérisé en ce que les octets supplémentaires (AOC) du code opération sont prélevés sur la sortie (29) d'un compteur binaire de cycles (21) et sont transmis au registre d'adresses (3) de la mémoire de commande.

FIG.1

FIG. 2

FIG. 3

FIG.9

FIG.4

FIG.5

FIG.6

FIG.7

FIG.8

FIG.12

# FIG.10

| CSAR | | | CS-ADR. | MCB |
|---|---|---|---|---|
| BITS 15-8 | 7-0 | | | |

# FIG.11